# EUROPÄISCHE PATENTSCHRIFT

(11) **EP 2 568 332 B1**
(45) Veröffentlichungstag und Bekanntmachung des Hinweises auf die Patenterteilung: **12.03.2014**
(21) Anmeldenummer: 11007231.1
(22) Anmeldetag: 06.09.2011
(51) Int. Cl.: G03B 42/02, G03B 42/04

(54) **Vorrichtung und System zum Auslesen von in Speicherleuchtstoffplatten gespeicherten Röntgeninformationen**
Device and system for reading out x-ray information stored in storage phosphor plates
Dispositif et système destinés à la lecture d'informations radiographiques stockées dans des plaques fluorescentes de mémoire

(43) Veröffentlichungstag der Anmeldung: 13.03.2013
(73) Patentinhaber: Agfa HealthCare N.V., 2640 Mortsel (BE)
(72) Erfinder: Pirmann, Anton, 81243 München (DE)
(74) Vertreter: Linsmeier, Josef

(56) Entgegenhaltungen:
- EP-A2- 1 209 517
- JP-A- 10 003 000
- US-A- 2 880 846
- US-A- 3 409 149
- US-A- 5 210 416
- US-A- 6 068 439

## Beschreibung

Die vorliegende Erfindung betrifft eine Vorrichtung sowie ein System zum Auslesen von in Speicherleuchtstoffplatten gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffplatte zu speichern. Zum Auslesen des latenten Bildes wird die Speicherleuchtstoffplatte mit Stimulationslicht bestrahlt und dabei zur Aussendung von Emissionslicht angeregt. Das Emissionslicht, dessen Intensität dem in der Speicherleuchtstoffplafte gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinischdiagnostischen Zwecken, bereitgestellt, indem sie an einem entsprechenden Ausgabegerät, wie z. B. einem Monitor und/oder Drucker, ausgegeben werden.

In Vorrichtungen und Systemen nach dem Stand der Technik werden Speicherleuchtstoffplatten meist mit Hilfe von rotierenden Walzenpaaren relativ zur Ausleseeinrichtung befördert.

Magnetische Transportvorrichtungen für Speicherleuchtstoffplatten sind beispielsweise in JP10003000A oder EP 1209517A gezeigt.

Es ist Aufgabe der Erfindung, eine Vorrichtung sowie ein System zum Auslesen von in Speicherleuchtstoffplatten gespeicherten Röntgeninformationen anzugeben, welche bzw. welches bei einfachem Aufbau einen möglichst zuverlässigen Transport der Speicherleuchtstoffplatte gewährleistet.

Diese Aufgabe wird durch die Vorrichtung bzw. das System gemäß den unabhängigen Ansprüchen gelöst.

Die erfindungsgemäße Vorrichtung umfasst eine Ausleseeinrichtung zum Bestrahlen der Speicherleuchtstoffplatte mit Stimulationslicht und zum Erfassen von hierbei in der Speicherleuchtstoffplatte angeregtem Emissionslicht sowie eine Transporteinrichtung zum Transportieren der Speicherleuchtstoffplatte relativ zur Ausleseeinrichtung, insbesondere an der Ausleseeinrichtung vorbei, mit einem Walzenantrieb und mindestens einer Walze, welche durch den Walzenantrieb in Rotation um ihre Rotationsachse versetzt werden kann, und zeichnet sich dadurch aus, dass die Walze mindestens einen magnetischen Bereich mit einem schraubenförmigem Verlauf aufweist.

Das erfindungsgemäße System umfasst die erfindungsgemäße Vorrichtung sowie eine Speicherleuchtstoffplatte mit einer Trägerschicht und einer auf der Trägerschicht befindlichen Speicherleuchtstoffschicht, wobei zumindest ein Teilbereich der Trägerschicht ferromagnetisch ist.

Die Erfindung basiert auf dem Gedanken, eine Beförderung der Speicherleuchtstoffplatte in der Vorrichtung bzw. im System durch nur eine Walze, die einen magnetischen Bereich aufweist, zu realisieren, wobei der an der Walze vorgesehene magnetische Bereich schraubenförmig verläuft. Unter einem schraubenförmigen Verlauf im Sinne der Erfindung ist hierbei ein Verlauf des magnetischen Bereichs in Form einer Schraubenlinie, Helix, Wendel oder einer sog. zylindrischen Spirale um die Rotationsachse der Walze zu verstehen, wobei der Abstand des magnetischen Bereichs zur Rotationsachse vorzugsweise konstant ist, d.h. der schraubenförmige Verlauf im Querschnitt kreisförmig ist. Alternativ ist es aber auch möglich, dass der Abstand des magnetischen Bereichs zur Rotationsachse im wendelförmigen Verlauf nicht konstant ist und somit von einem kreisförmigen Querschnitt abweicht. So würde beispielsweise ein ellipsenförmiger Querschnitt zu einer abgeflachten Helixform des magnetischen Bereichs führen. Unter einem magnetischen Bereich ist hierbei ein Bereich der Walze zu verstehen, welcher ferro- und/oder paramagnetische Körper durch magnetische Kräfte anzieht.

Eine entsprechend ausgestaltete - beispielsweise mit einer ferromagnetischen Trägerschicht versehene - Speicherleuchtstoffplatte wird von den magnetischen Bereichen der Walze angezogen, so dass die bei einem Kontakt zwischen der Speicherleuchtstoffplatte und der Walze auftretenden Reibungskräfte - beispielsweise im Vergleich zu einer allein durch Schwerkraft bewirkten Auflage - stark erhöht sind. Durch eine Rotation der mit dem magnetischen Bereich versehenen Walze kann dadurch eine zuverlässige Beförderung der Speicherleuchtstoffplatte erreicht werden, ohne dass eine weitere Walze zur Erzeugung einer Andruckkraft auf die rotierende Walze erforderlich wäre. Der Aufbau der Vorrichtung bzw. des Systems wird dadurch wesentlich vereinfacht, wobei gleichzeitig eine hohe Zuverlässigkeit beim Transport der Speicherleuchtstoffplatte gewährleistet wird.

Durch den schraubenförmig ausgestalteten Verlauf des magnetischen Bereichs wird gegenüber einer vollständigen Ummantelung der Walze mit einer magnetischen Schicht darüber hinaus der Vorteil erzielt, dass bei einer vollständigen Drehung der Walze keine Stoßkanten bzw. keine Überlappung der Anfangs- und Endkante der Ummantelung auftreten, so dass ein ruckfreier Transport mit hoher Zuverlässigkeit gewährleistet wird. Durch die Vermeidung von Stoßkanten bzw. sich überlappenden Kanten werden außerdem Sprünge der durch den magnetischen Bereich erzeugten Magnetfeldlinien bei der Rotation der Walze verhindert, was zusätzlich zur Gewährleistung eines ruckfreien Transportes der Speicherleuchtstoffplatte beiträgt. Dadurch, dass der magnetische Bereich bei der Herstellung der Walze nicht innerhalb enger Toleranzen auf Stoß geschnitten werden muss - wie etwa bei einer vollständigen Ummantelung mit einer magnetischen Schicht -, wird außerdem die Herstellung der Walze deutlich vereinfacht.

Vorzugsweise verläuft der magnetische Bereich schraubenförmig um die Rotationsachse der Walze. Dadurch bleibt der Abstand des magnetischen Bereichs zu der zu befördernden Speicherleuchtstoffplatte bei einer Drehung der Walze stets konstant, so dass die auftretenden Anziehungskräfte durch die Drehung der Walze im Wesentlichen unverändert bleiben. Der Transport erfolgt dadurch besonders zuverlässig und ruckfrei.

Es ist außerdem bevorzugt, dass magnetische Bereich die Form eines schraubenförmig verlaufenden magnetischen Streifens aufweist. Durch die streifenförmige Ausgestaltung des magnetischen Bereichs lässt sich dieser einfach realisieren, beispielsweise indem der magnetische Streifen aus einer Magnetfolie ausgeschnitten wird und anschließend auf die Walze aufgebracht wird. Falls die Walze ferromagnetisch ist, wird der schraubenartig um die Walze gewundene magnetische Streifen aufgrund der magnetischen Anziehungskräfte an dieser selbst haften bleiben. Zusätzlich oder für den Fall, dass die Walze nicht ferromagnetisch ist, kann der magnetische Streifen beispielsweise durch Kleben an der Walze befestigt werden. Durch die streifenförmige Ausgestaltung des magnetischen Bereichs werden hohe Anziehungskräfte und dadurch hohe Reibungskräfte zwischen der Speicherleuchtstoffplatte und der Walze erreicht, was die Zuverlässigkeit des Transports der Speicherleuchtstoffplatte weiter erhöht.

Bei einer weiteren bevorzugten Ausgestaltung ist vorgesehen, dass die magnetischen Feldlinien des schraubenförmig verlaufenden magnetischen Streifens im Wesentlichen parallel zur Rotationsachse der Walze verlaufen. Hierdurch werden einerseits hohe magnetische Anziehungskräfte zwischen Speicherleuchtstoffplatte und Walze erzielt und andererseits Unterbrechungen oder Sprünge der Magnetfeldlinien bei einer Drehung der Walze vermieden oder zumindest stark reduziert.

Alternativ ist es aber auch möglich, dass die magnetischen Feldlinien des schraubenförmig verlaufenden magnetischen Streifens im Wesentlichen parallel zu seinem schraubenförmigen Verlauf verlaufen. Die magnetischen Feldlinien haben hierbei einen Winkel zur Rotationsachse der Walze, welcher der Steigung des schraubenförmigen Verlaufs des Streifens um die Rotationsachse entspricht. Diese Ausführung hat den Vorteil, dass der Verschnitt beim Ausschneiden des Streifens aus einer magnetischen Folie, deren magnetische Feldlinien in der Regel parallel bzw. senkrecht zu den Seitenkanten der Folie verlaufen, minimiert wird.

Vorzugsweise ist der magnetische Bereich dauermagnetisch ausgebildet. Der magnetische Bereich lässt sich dadurch besonders einfach realisieren, beispielsweise durch Aufbringen eines aus einer Folie mit permanentmagnetischem Material ausgeschnittenen Streifens auf die Walze. Die vom magnetischen Bereich ausgeübte magnetische Anziehungskraft ist daher permanent vorhanden und braucht nicht erst bei Bedarf aktiviert zu werden.

Bei einer alternativen Ausgestaltung ist der magnetische Bereich als Elektromagnet ausgebildet. Ein Elektromagnet kann beispielsweise durch eine oder mehrere Spulen, vorzugsweise mit Eisenkern, realisiert werden. Die Spule ist erfindungsgemäß schraubenförmig in oder auf der Walze verlegt. Diese Ausgestaltung hat den Vorteil, dass die magnetische Anziehungskraft zwischen dem magnetischen Bereich und der Speicherleuchtstoffplatte bei Bedarf abgeschaltet werden kann, so dass eine einfachere Ablösung der Speicherleuchtstoffplatte von der Walze ermöglicht wird. Dies kann z.B. bei Wartungsarbeiten oder bei der Beseitigung eines etwaigen Bildplattenstaus von Vorteil sein.

Bei einer weiteren bevorzugten Ausgestaltung der Erfindung weist die Walze einen, insbesondere zylinderförmigen, Walzenkörper auf, in dessen Umfangsbereich der schraubenförmig verlaufende magnetische Bereich vorgesehen ist. Insbesondere ist der schraubenförmig verlaufende magnetische Bereich auf der äußeren Umfangsfläche des Walzenkörpers vorgesehen. Durch diese Maßnahmen lässt sich die erfindungsgemäße Walze besonders einfach fertigen, wobei gleichzeitig gewährleistet ist, dass die magnetischen Anziehungskräfte zwischen der Walze und der Speicherleuchtstoffplatte während der Rotation der Walze keinen wesentlichen Schwankungen unterliegen, so dass der Plattentransport ruckfrei erfolgen kann.

Vorzugsweise ist der Walzenkörper ferromagnetisch. Falls der magnetische Bereich auf den äußeren oder in den inneren Umfangsbereich des Walzenkörpers aufgelegt bzw. eingelegt wird, dann wird dieser bereits allein durch magnetische Anziehungskräfte am Umfangsbereich gehalten, so dass zusätzliche Befestigungsmittel, beispielsweise Nieten, Schrauben oder Klebstoff, nicht erforderlich sind. Gleichwohl kann eine zusätzliche Befestigung des magnetischen Bereichs am Umfangsbereich der Walze von Vorteil sein, um eine besonders sichere Fixierung zu gewährleisten. Vorzugsweise wird der magnetische Bereich am Umfangsbereich des Walzenkörpers hierbei durch Kleben befestigt.

Vorzugsweise ist der Walzenkörper aus einem ferritischen Stahl hergestellt. Bei dem hierbei bevorzugt zu verwendenden ferritischen Stahl handelt es sich um eine ferromagnetische Stahllegierung, insbesondere mit hoher Korrosionsbeständigkeit.

Es ist außerdem bevorzugt, dass die Ausleseeinrichtung eine Lichtquelle zum Bestrahlen der Speicherleuchtstoffplatte mit Stimulationslicht und einen Detektor zum Erfassen von hierbei in der Speicherleuchtstoffplatte angeregtem Emissionslicht aufweist.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung eines Beispiels einer Vorrichtung zum Auslesen von Speicherleuchtstoffplatten;
- Fig. 2: ein erstes Beispiel einer Walze zusammen mit einem Beispiel einer Speicherleuchtstoffschicht;
- Fig. 3: ein zweites Beispiel einer Walze;
- Fig. 4: ein Beispiel eines Querschnitts durch eine Magnetfolie;
- Fig. 5: ein drittes Beispiel einer Walze; und
- Fig. 6: ein viertes Beispiel einer Walze.

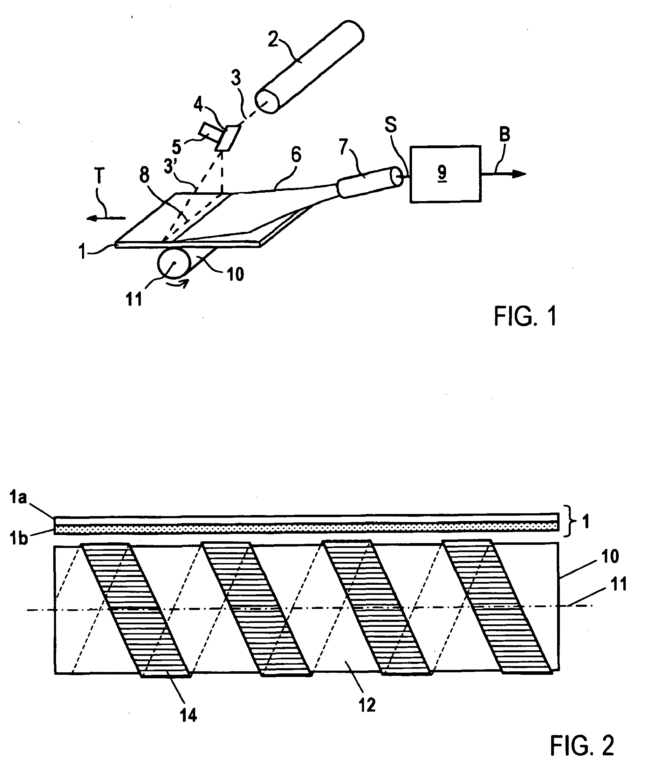

Figur 1 zeigt eine Auslesevorrichtung zum Auslesen einer Speicherleuchtstoffplatte 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffplatte 1 bewegt. Das Ablenkelement 4 weist eine reflektierende Fläche, insbesondere in Form eines Spiegels, auf, welche durch eine Antriebseinrichtung 5 in Oszillation versetzt wird. Alternativ kann das Ablenkelement 4 einen Polygonspiegel aufweisen, welcher durch die Antriebseinrichtung 5, in diesem Fall ein Motor, in Rotation versetzt wird und den Stimulationslichtstrahl 3 über die Speicherleuchtstoffplatte 1 lenkt.

Während der Bewegung des abgelenkten Stimulationslichtstrahls 3' über die Speicherleuchtstoffplatte 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Einrichtung 9 zugeführt, in welcher digitale Bildsignalwerte B für einzelne Bildpunkte des ausgelesenen Röntgenbildes abgeleitet werden.

Durch eine Beförderung der Speicherleuchtstoffplatte 1 in Transportrichtung T mittels einer Transporteinrichtung wird ein sukzessives Auslesen einzelner Zeilen 8 der Speicherleuchtstoffplatte 1 erreicht und damit ein zweidimensionales, aus einzelnen Bildpunkten mit jeweils einem zugehörigen Bildsignalwert B zusammengesetztes Röntgenbild erhalten.

Die Transporteinrichtung umfasst im gezeigten Beispiel eine Walze 10, die durch einen Walzenantrieb (nicht dargestellt) in Rotation um die Rotationsachse 11 versetzt wird. Die Speicherleuchtstoffplatte 1 liegt mit ihrer Unterseite auf der Walze 10 auf und wird aufgrund des hierbei auftretenden Reibschlusses durch aufgrund der Rotation der Walze 10 in Richtung T befördert. Die Walze 10 weist magnetische, vorzugsweise permanentmagnetische oder elektromagnetische, Bereiche auf, welche mit in der Speicherleuchtstoffplatte 1 vorgesehenen ferromagnetischen Bereichen wechselwirken, so dass die Speicherleuchtstoffplatte 1 von der Walze 10 angezogen wird, was den Reibschluss wesentlich verstärkt. Dies wird nachfolgend anhand von weiteren Figuren näher erläutert.

Figur 2 zeigt ein erstes Beispiel der Walze 10 in einer Seitenansicht. Die Walze 10 ist vorzugsweise als Vollzylinder aus einem ferromagnetischen Material ausgestaltet. Alternativ kann die Walze aber auch durch einen länglichen Hohlzylinder gebildet werden. Anstelle eines ferromagnetischen Materials kann für die Walze 10 auch ein paramagnetisches Material, wie z.B. Aluminium, verwendet werden.

Auf dem äußeren Umfangsbereich 12 der Walze 10 ist ein streifenförmiger Bereich 14 aufgebracht, der ein permanentmagnetisches Material enthält und schraubenförmig um den äußeren Umfangsbereich 12 der Walze 10 gewunden ist. Das im streifenförmigen Bereich 14 befindliche permanentmagnetische Material erzeugt Magnetfeldlinien, die im dargestellten Beispiel durch eine waagerechte Strichelung des streifenförmigen Bereichs 14 schematisch angedeutet sind. Vorzugsweise ist das magnetische Material im streifenförmigen Bereich 14 derart ausgerichtet und/oder die Steigung des schraubenförmigen Verlaufs des streifenförmigen Bereichs 14 so gewählt, dass die Magnetfeldlinien im Wesentlichen parallel zur Rotationsachse 11 der Walze 10 verlaufen.

In Figur 2 ist ferner ein Querschnitt einer Speicherleuchtstoffplatte 1 dargestellt. Eine Speicherleuchtstoffschicht 1 a in Form von in einer Trägermatrix befindlichen Speicherleuchtstoffpartikeln (sog. Powder Image Plate, PIP) oder in Form von nadelförmigen Speicherleuchtstoffstrukturen (sog. Needle Image Plate, NIP) ist auf einer Trägerschicht 1 b aufgebracht, welche zumindest in einem Teilbereich ferromagnetisch ist. Dies kann vorzugsweise dadurch realisiert werden, dass die Trägerschicht 1 b eine Kunststoffschicht aufweist, in welcher ferromagnetische Partikel, beispielsweise Eisenpartikel, eingebracht werden. Alternativ oder zusätzlich ist es aber auch möglich, dass zumindest eine Teilfläche der Trägerschicht 1 b ein ferromagnetisches Material umfasst, beispielsweise in Form eines Stahlblechs, welches gegebenenfalls auf der der Speicherleuchtstoffschicht 1a zugewandten und/oder von dieser abgewandten Seite mit einer Kunststoffschicht versehen ist.

Wenn die Trägerschicht 1 b der Speicherleuchtstoffplatte 1 mit dem streifenförmigen magnetischen Bereich 14 der Walze 10 in Kontakt kommt, werden die hierbei auftretenden Reibungskräfte aufgrund der zwischen dem streifenförmigen Bereich 14 und der Trägerschicht 1 b wirkenden magnetischen Kräfte stark erhöht, so dass die Speicherleuchtstoffplatte 1 alleine durch eine Rotation der Walze 10 - wie in Figur 1 dargestellt - zuverlässig befördert werden kann, ohne dass eine über der Walze 10 angeordnete zusätzliche Gegenwalze erforderlich wäre.

Aufgrund des schraubenförmigen Verlaufs des streifenförmigen Bereichs 14 wird hierbei gegenüber einer einfachen Ummantelung der Walze 10 mit einer magnetischen Schicht der Vorteil erzielt, dass bei einer Rotation der Walze 10 um 360° keine Stoßkanten bzw. keine sich überlappenden Enden der Ummantelung auftreten und somit ein ruckfreier Transport der Speicherleuchtstoffplatte 1 ermöglicht wird.

Dies ist auch in fertigungstechnischer Hinsicht von Vorteil, da ein exaktes Zuschneiden der magnetischen Schicht auf Stoß - wie bei einer einfachen Ummantelung erforderlich - aufgrund des schraubenförmigen Verlaufs des Bereichs 14 entfallen kann. Nicht zuletzt wird durch den schraubenförmigen Verlauf des streifenförmigen Bereichs 14 der Vorteil erzielt, dass die Magnetfeldlinien in Ermangelung eines Stoßes oder Überlapps an den Enden der Ummantelung auch bei einer 360°-Umdrehung keine abrupten Sprünge zeigen, was die Ruckfreiheit des Transportes der Speicherleuchtstoffplatte zusätzlich erhöht.

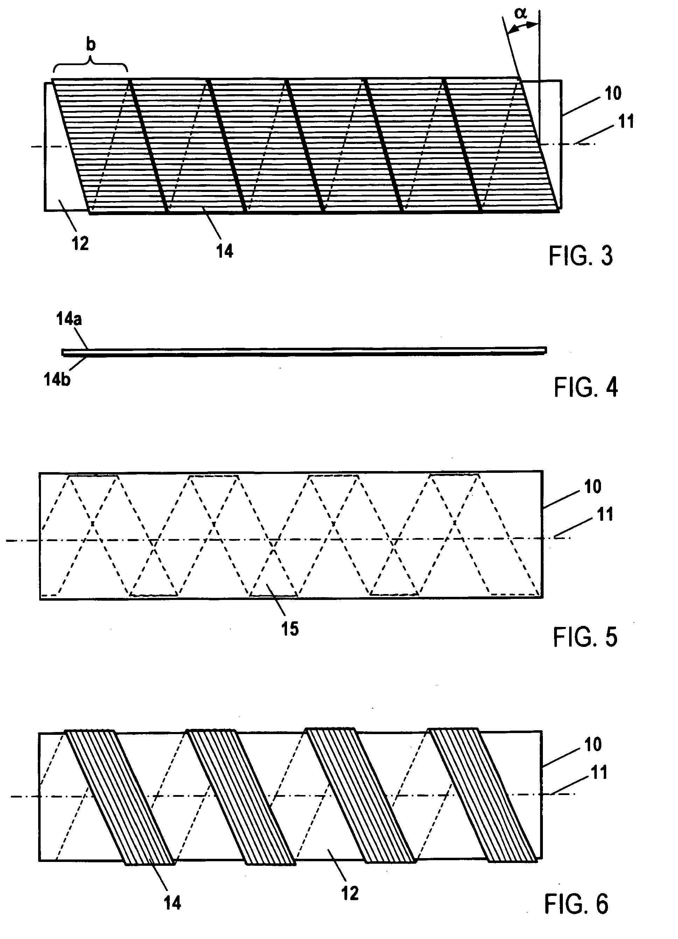

Figur 3 zeigt ein zweites Beispiel einer Walze 10 in einer Seitenansicht. Im Unterschied zu der in Figur 2 gezeigten Walze ist die Breite b des streifenförmigen Bereichs 14 und der Steigungswinkel α des schraubenförmigen Verlaufs des streifenförmigen Bereichs 14 so gewählt, dass zwischen den einzelnen Windungen des streifenförmigen Bereichs 14 im Wesentlichen keine Zwischenräume mehr auftreten, so dass der wesentliche Teil des äußeren Umfangsbereichs 12 der Walze 10 durch den schraubenförmig verlaufenden streifenförmigen Bereich 14 bedeckt ist.

Bei dieser Ausführung werden besonders hohe magnetische Anziehungskräfte zwischen der ferromagnetischen Trägerschicht 1 b der Speicherleuchtstoffplatte 1 und der Walze 10 erreicht. Darüber hinaus wird aufgrund fehlender Zwischenräume zwischen den einzelnen Steigungsabschnitten des streifenförmigen Bereichs 14 ein besonders ruhiger Transport der Speicherleuchtstoffplatte 1 erreicht. Im Übrigen gelten die Erläuterungen im Zusammenhang mit dem in Figur 2 dargestellten Beispiel entsprechend.

Figur 4 zeigt ein Beispiel eines Querschnitts durch eine Magnetfolie, durch welche der streifenförmige Bereich 14 (siehe Figuren 2 und 3) realisiert werden kann. Die Magnetfolie umfasst eine paramagnetische Schicht 14a, die an ihrer Unterseite mit einer Kleberschicht 14b versehen ist und mittels dieser auf den äußeren Umfangsbereich 12 der Walze 10 aufgeklebt werden kann. Wie bereits erwähnt, kann die Walze 10 zumindest in ihrem äußeren Umfangsbereich 12 ferromagnetisch ausgestaltet sein, so dass die permanentmagnetische Schicht 14a zusätzlich durch magnetische Anziehungskräfte an der Walze 10 gehalten wird. Im Falle eines ferromagnetischen Umfangsbereichs 12 der Walze 10 kann aber auch auf die zusätzliche Kleberschicht 14b verzichtet werden, sofern die magnetischen Anziehungskräfte zwischen der permanentmagnetischen Schicht 14a und der Walze 10 ausreichend groß sind.

Figur 5 zeigt ein drittes Beispiel einer Walze 10, bei welcher ein schraubenförmig verlaufender Bereich 15 aus permanentmagnetischem Material im Inneren der Walze 10 angeordnet ist. Dies kann beispielsweise dadurch realisiert werden, dass die Walze 10 als zylindrischer Hohlkörper ausgebildet ist, an dessen zylindrischer Innenwand der streifenförmige Bereich 15 angebracht ist, beispielsweise durch Kleben und/oder aufgrund magnetischer Anziehungskräfte, falls die als Hohlzylinder ausgebildete Walze 10 ferromagnetisch ist.

Neben den bereits im Zusammenhang mit den Figuren 2 und 3 erläuterten Vorteilen, wird bei diesem Ausführungsbeispiel der besondere Vorteil erzielt, dass einerseits die Reibungskräfte bei einem Kontakt zwischen der Trägerschicht 1 b der Speicherleuchtstoffplatte 1 und dem äußeren Umfangsbereich 12 der Walze 10 aufgrund der magnetischen Anziehungskräfte groß genug sind, um einen zuverlässigen Transport der Speicherleuchtstoffplatte 1 zu gewährleisten, und andererseits der bei einem direkten Kontakt mit der Walze 10 auftretende Verschleiß der Trägerschicht 1 b vermindert werden kann.

Figur 6 zeigt ein viertes Beispiel einer Walze 10 mit einem an deren Umfangsbereich 12 schraubenförmig verlaufenden Bereich 14 aus permanentmagnetischem Material. Im Unterschied zu dem in Figur 2 gezeigten Beispiel verlaufen die magnetischen Feldlinien des streifenförmigen Bereichs 14 nicht parallel zur Rotationsachse 11 der Walze 10, sondern im Wesentlichen entlang des schraubenförmigen Verlaufs, d.h. parallel zur Steigung des schraubenförmigen Verlaufs. Die magnetischen Feldlinien nehmen hierbei einen Winkel zur Rotationsachse 11 der Walze 10 ein, welcher der Steigung des schraubenförmigen Verlaufs des Streifens 14 um die Rotationsachse 11 entspricht. Diese Ausführung hat gegenüber dem in Figur 2 gezeigten Beispiel den Vorteil, dass der Verschnitt beim Ausschneiden des Streifens 14 aus einer magnetischen Folie, deren magnetische Feldlinien parallel bzw. senkrecht zu den Seitenkanten der Folie verlaufen, minimiert wird. Darüber hinaus werden bei nicht zu geringen Steigungswinkeln von insbesondere mehr als 15°, insbesondere mehr als 22°, auch bei dieser Variante relativ hohe magnetische Anziehungskräfte zwischen der Speicherleuchtstoffplatte 1 und der Walze 10 erreicht und gleichzeitig Unterbrechungen oder Sprünge der Magnetfeldlinien bei einer Drehung der Walze 10 gering gehalten.

## Patentansprüche

1. Vorrichtung zum Auslesen von in einer Speicherleuchtstoffplatte (1) gespeicherten Röntgeninformationen mit
einer Ausleseeinrichtung (2, 4 - 7, 9) zum Bestrahlen der Speicherleuchtstoffplatte (1) mit Stimulationslicht (3, 3', 8) und zum Erfassen von hierbei in der Speicherleuchtstoffplatte (1) angeregtem Emissionslicht und
einer Transporteinrichtung (10) zum Transportieren der Speicherleuchtstoffplatte (1) relativ zur Ausleseeinrichtung (2, 4 - 7, 9) mit einem Walzenantrieb und mindestens einer Walze (10), welche durch den Walzenantrieb in Rotation um ihre Rotationsachse (11) versetzt werden kann,
**dadurch gekennzeichnet, dass**
die Walze (10) mindestens einen magnetischen Bereich (14, 15) mit einem schraubenförmigem Verlauf aufweist.

2. Vorrichtung nach Anspruch 1, wobei der magnetische Bereich (14, 15) schraubenförmig um die Rotationsachse (11) der Walze (10) verläuft.

3. Vorrichtung nach Anspruch 1 oder 2, wobei der magnetische Bereich (14, 15) die Form eines schraubenförmig verlaufenden magnetischen Streifens aufweist.

4. Vorrichtung nach Anspruch 3, wobei die magnetischen Feldlinien des schraubenförmig verlaufenden magnetischen Streifens im Wesentlichen parallel zur Rotationsachse (11) der Walze (10) verlaufen.

5. Vorrichtung nach Anspruch 3, wobei die magnetischen Feldlinien des schraubenförmig verlaufenden magnetischen Streifens im Wesentlichen parallel zu seinem schraubenförmigen Verlauf verlaufen.

6. Vorrichtung nach einem der vorangehenden Ansprüche, wobei der magnetische Bereich (14, 15) dauermagnetisch ausgebildet ist.

7. Vorrichtung nach einem der vorangehenden Ansprüche, wobei der magnetische Bereich (14, 15) als Elektromagnet ausgebildet ist.

8. Vorrichtung nach einem der vorangehenden Ansprüche, wobei die Walze (10) einen, insbesondere zylinderförmigen, Walzenkörper aufweist, in dessen Umfangsbereich der schraubenförmig verlaufende magnetische Bereich (14, 15) vorgesehen ist.

9. Vorrichtung nach Anspruch 8 wobei der schraubenförmig verlaufende magnetische Bereich (14) auf der äußeren Umfangsfläche (12) des Walzenkörpers vorgesehen ist.

10. Vorrichtung nach Anspruch 8 oder 9, wobei der Walzenkörper ferromagnetisch ist.

11. Vorrichtung nach Anspruch 10, wobei der Walzenkörper einen ferritischen Stahl aufweist.

12. Vorrichtung nach einem der vorangehenden Ansprüche, wobei die Ausleseeinrichtung eine Lichtquelle (2) zum Bestrahlen der Speicherleuchtstoffplatte (1) mit Stimulationslicht (3, 3', 8) und einen Detektor (7) zum Erfassen von hierbei in der Speicherleuchtstoffplatte (1) angeregtem Emissionslicht aufweist.

13. System zum Auslesen von in einer Speicherleuchtstoffplatte (1) gespeicherten Röntgeninformationen mit einer Speicherleuchtstoffplatte (1), welche eine Trägerschicht (1 b) und eine auf der Trägerschicht (1 b) befindliche Speicherleuchtstoffschicht (1a) aufweist, wobei zumindest ein Teilbereich der Trägerschicht (1 b) ferromagnetisch ist,
**gekennzeichnet durch**
eine Vorrichtung nach einem der vorangehenden Ansprüche.

14. System nach Anspruch 13, wobei die Trägerschicht (1b) einen ferritischen Stahl, insbesondere in Form eines Stahlblechs oder in Form von in die Trägerschicht (1 b) eingeschlossenen Stahlpartikeln, aufweist.

## Claims

1. A device for reading out X-ray information stored in a storage phosphor plate.(1) comprising
a read-out means (2, 4 - 7, 9) for irradiating the storage phosphor plate (1) with stimulating light (3, 3', 8) and for detecting emission light which is thereby stimulated in the storage phosphor plate (1) and
a transport means (10) for transporting the storage phosphor plate (1) relative to the read-out means (2, 4 - 7, 9), comprising a roller drive and at least one roller (10) which can be displaced rotationally around its rotational axis (11) by means of the roller drive,
**characterized in that**
the roller (10) comprises a magnetic region (14, 15) following a helical course.

2. A device according to claim 1, wherein the magnetic region (14, 15) follows a helical course around the rotational axis (11) of roller (10).

3. A device according to claim 1 or 2, wherein the magnetic region (14, 15) is in the form of a helically extending magnetic strip.

4. A device according to claim 3, wherein the magnetic field lines of the helically extending magnetic strip run substantially parallel to the rotational axis (11) of roller (10).

5. A device according to claim 3, wherein the magnetic field lines of the helically extending magnetic strip run substantially parallel to its helical course.

6. A device according to any of the preceding claims, wherein the magnetic region (14, 15) is in the form of a permanent magnet.

7. A device according to any of the preceding claims, wherein the magnetic region (14, 15) is in the form of an electromagnet.

8. A device according to any of the preceding claims, wherein the roller (10) has an in particular cylindrical roller body in the peripheral region of which the helically extending magnetic region (14, 15) is provided.

9. A device according to claim 8, wherein the helically extending magnetic region (14) is provided on the outer peripheral surface (12) of the roller body.

10. A device according to claim 8 or 9, wherein the roller body is ferromagnetic.

11. A device according to claim 10, wherein the roller body comprises a ferritic steel.

12. A device according to any of the preceding claims, wherein the read-out means comprises a light source (2) for irradiating the storage phosphor plate (1) with stimulating light (3, 3', 8) and a detector (7) for detecting emission light which is thereby stimulated in the storage phosphor plate (1).

13. A system for reading out X-ray information stored in a storage phosphor plate (1) comprising a storage phosphor plate (1) which comprises a base layer (1b) and a storage phosphor layer (1a) applied to the base layer (1b), at least one partial region of the base layer (1b) being ferromagnetic,
**characterized by**
a device according to any of the preceding claims.

14. A system according to claim 13, wherein the base layer (1b) comprises a ferritic steel, in particular in the form of a steel sheet or in the form of steel particles enclosed in the base layer (1b).

## Revendications

1. Dispositif de lecture d'informations radiographiques stockées dans une plaque luminescente à mémoire (1), comprenant un moyen de lecture (2, 4 - 7, 9) servant à irradier la plaque luminescente à mémoire (1) avec de la lumière de stimulation (3, 3', 8) et à capter la lumière d'émission stimulée dans la plaque luminescente à mémoire (1) lors de cette irradiation et un moyen de transport (10) servant à transporter la plaque luminescente à mémoire (1) par rapport au moyen de lecture (2, 4 - 7, 9), comprenant un entraînement à rouleau et au moins un rouleau (10) pouvant être déplacé rotativement autour de son axe de rotation (11) par l'entraînement à rouleau,
**caractérisé en ce que**
le rouleau (10) présente au moins une zone magnétique (14, 15) qui s'étend hélicoïdalement.

2. Dispositif selon la revendication 1, **caractérisé en ce que** la zone magnétique (14, 15) s'étend hélicoïdalement autour de l'axe de rotation (11) du rouleau (10).

3. Dispositif selon la revendication 1 ou 2, **caractérisé en ce que** la zone magnétique (14, 15) est réalisée sous forme d'une bande magnétique s'étendant hélicoïdalement.

4. Dispositif selon la revendication 3, **caractérisé en ce que** les lignes de champ magnétique de la bande magnétique s'étendant hélicoïdalement sont essentiellement parallèles à l'axe de rotation (11) du rouleau (10).

5. Dispositif selon la revendication 3, **caractérisé en ce que** les lignes de champ magnétique de la bande magnétique s'étendant hélicoïdalement sont essentiellement parallèles à son tracé hélicoïdal.

6. Dispositif selon l'une quelconque des revendications précédentes, **caractérisé en ce que** la zone magnétique (14, 15) est réalisée sous forme d'aimant permanent.

7. Dispositif selon l'une quelconque des revendications précédentes, **caractérisé en ce que** la zone magnétique (14, 15) est réalisée sous forme d'électroaimant.

8. Dispositif selon l'une quelconque des revendications précédentes, **caractérisé en ce que** le rouleau (10) présente un corps de rouleau, en particulier de forme cylindrique, dont la zone circonférentielle abrite la zone magnétique s'étendant hélicoïdalement (14, 15).

9. Dispositif selon la revendication 8, **caractérisé en ce que** la zone magnétique s'étendant hélicoïdalement (14) est réalisée sur la surface circonférentielle extérieure (12) du corps de rouleau.

10. Dispositif selon la revendication 8 ou 9, **caractérisé en ce que** le corps de rouleau est ferromagnétique.

11. Dispositif selon la revendication 10, **caractérisé en ce que** le corps de rouleau présente un acier ferritique.

12. dispositif selon l'une quelconque des revendications précédentes, **caractérisé en ce que** le moyen de lecture comprend une source lumineuse (2) servant à irradier la plaque luminescente à mémoire (1) avec de la lumière de stimulation (3, 3', 8) et un détecteur (7) servant à capter la lumière d'émission stimulée dans la plaque luminescente à mémoire (1) lors de cette irradiation.

13. système servant à la lecture d'informations radiographiques stockées dans une plaque luminescente à mémoire (1), comprenant une plaque luminescente à mémoire (1) présentant une couche de support (1b) et une couche luminescente à mémoire (1a) appliquée sur ladite couche de support (1b), au moins une zone partielle de la couche de support (1b) étant ferromagnétique,
**caractérisé par**
un dispositif selon l'une quelconque des revendications précédentes.

14. Système selon la revendication 13, **caractérisé en ce que** la couche de support (1b) présente un acier ferritique, en particulier sous forme d'une tôle d'acier ou sous forme de particules d'acier incluses dans la couche de support (1b).
